# FASCICULE DE BREVET EUROPEEN

(11) **EP 2 955 661 B1**
(45) Date de publication et mention de la délivrance du brevet: **15.06.2016**
(21) Numéro de dépôt: 15159615.2
(22) Date de dépôt: 18.03.2015
(51) Int. Cl.: G06F 21/75, G06F 21/79

(54) **Protection de données stockées dans une mémoire volatile**
Schutz von in einem flüchtigen Speicher gespeicherten Daten
Protection of data stored in a volatile memory

(30) Priorité: 10.06.2014 FR 1455257
(43) Date de publication de la demande: 16.12.2015
(73) Titulaire: STMICROELECTRONICS (ROUSSET) SAS, 13790 Rousset (FR)
(72) Inventeur: Teglia, Yannick, 13720 Belcodene (FR)
(74) Mandataire: Thibon, Laurent

(56) Documents cités:
- WO-A2-2011/018414
- FR-A1- 2 974 648

## Description

### Domaine

La présente description concerne, de façon générale, les circuits électroniques, et plus particulièrement les circuits contenant des éléments stockant des données de façon volatile. La présente description s'applique plus particulièrement aux systèmes électroniques intégrés (System On Chip).

### Exposé de l'art antérieur

Dès qu'un système électronique manipule des données numériques, ces données sont stockées au moins temporairement dans des éléments des circuits électroniques. Il s'agit typiquement d'éléments de mémorisation volatile de type mémoire vive (RAM), ou de registres ou de bascules stockant des données binaires lorsqu'elles sont traitées par le circuit électronique.

En principe, ces données disparaissent lorsque le circuit intégré n'est plus alimenté. En fait, elles ne disparaissent pas réellement, mais l'état qu'elles représentent n'est plus fiable lors de la remise en route du circuit.

Dans des circuits manipulant des quantités numériques considérées comme secrètes, c'est-à-dire dont l'accès doit être réservé à des utilisateurs ou à des circuits autorisés, on doit veiller à ce que les données manipulées par un circuit intégré de façon volatile ne soient plus accessibles dans les éléments de mémorisation pour des applications autres que les applications autorisées. Des zones de la mémoire vive affectées à ces applications sont donc généralement réservées. Cette réservation est cependant dynamique, c'est-à-dire qu'elle disparait lors de l'extinction ou d'une réinitialisation du circuit. Il faut donc s'assurer que les données contenues dans des zones précédemment réservées ne soient plus accessibles, par exemple, après redémarrage du système électronique. En effet, même si l'extinction du circuit rend ces données non fiables, elles sont susceptibles de contenir, même partiellement, des informations secrètes. On prévoit donc habituellement une première étape de réinitialisation des éléments de mémoire volatile à l'allumage d'un circuit électronique qui consiste à effacer la mémoire à l'allumage. Une telle technique prend du temps.

Le document FR-A-2 974 648 décrit un procédé de protection d'une mémoire vive contre des attaques par injections de fautes.

Le document WO 2011/018414 décrit un système comprenant une mémoire utilisée comme fonction de génération d'un motif d'identification.

### Résumé

Un mode de réalisation vise à pallier tout ou partie des inconvénients des systèmes électroniques manipulant de façon volatile des données considérées comme secrètes ou à accès réservés à certaines applications.

Un autre mode de réalisation vise à proposer un procédé de protection de données numériques contenues dans des éléments de stockage volatile d'un circuit intégré.

Selon un premier aspect, un mode de réalisation vise une solution particulièrement adaptée à la protection de données stockées dans des zones d'une mémoire volatile.

Selon un autre aspect, un mode de réalisation vise une détection exploitant des circuits simples.

Ainsi, un mode de réalisation prévoit un procédé de détection d'une attaque par refroidissement d'un circuit intégré comportant les étapes suivantes :
transférer, dans une première mémoire volatile du circuit intégré, un motif stocké dans une mémoire non volatile du circuit ;
provoquer périodiquement une extinction et un allumage de la première mémoire volatile ; et
vérifier que le nombre de bits ayant changé d'état est compris dans une plage de valeurs.

Selon un mode de réalisation, le motif est rechargé dans la première mémoire volatile avant chaque extinction.

Selon un mode de réalisation, le motif est choisi pour que ledit nombre de bits changeant d'état varie en fonction de la température du circuit intégré.

Selon un mode de réalisation, ladite plage de valeurs est déterminée par analyse statistique des états pris par les bits de la première mémoire volatile lors d'allumages successifs dans une phase d'apprentissage.

Selon un mode de réalisation, des informations à protéger sont contenues dans une deuxième mémoire volatile, distincte de la première.

Un mode de réalisation prévoit un circuit intégré comportant :
une première mémoire volatile ;
une mémoire non volatile ; et
des éléments adaptés à la mise en oeuvre du procédé ci-dessus.

Selon un mode de réalisation, le circuit comporte en outre une deuxième mémoire volatile, distincte de la première et contenant des informations à protéger contre des attaques par allumages successifs et refroidissement du circuit intégré.

Selon un mode de réalisation, le circuit comporte en outre un circuit de commande provoquant, à chaque initialisation du circuit intégré, un transfert dudit motif de la mémoire non volatile vers la première mémoire volatile.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un schéma bloc d'un exemple de circuit électronique du type auquel s'appliquent les modes de réalisation qui vont être décrits ;
la figure 2 est une représentation schématique d'un mode de réalisation d'une première phase d'un procédé de protection du contenu d'une mémoire vive selon le premier aspect ;
la figure 3 illustre un exemple d'histogramme obtenu par la mise en oeuvre du procédé de la figure 2 ;
la figure 4 est un schéma-bloc d'un mode de réalisation d'un circuit intégré équipé d'un circuit de détection d'une attaque par refroidissement et allumage ;
la figure 5 est une représentation schématique d'un mode de réalisation d'une deuxième phase du procédé de protection de la figure 2 ;
la figure 6 représente, de façon schématique et sous forme de blocs, un mode de réalisation d'un élément d'un circuit de détection selon le deuxième aspect ; et
les figures 7A à 7C et 8A à 8C illustrent le fonctionnement du circuit de détection de la figure 6.

### Description détaillée

De mêmes éléments ont été désignés par de mêmes références aux différentes figures. Par souci de clarté, seuls les étapes et éléments utiles à la compréhension des modes de réalisation qui vont être décrits et ont été représentés seront détaillés. En particulier, la constitution d'une mémoire volatile n'a pas été détaillée, les modes de réalisation décrits étant compatibles avec les structures et caractéristiques usuelles de tels mémoires et éléments de stockage volatile. De plus, les circuits et systèmes électroniques incluant des éléments de mémorisation volatile dont le contenu doit être protégé n'ont pas non plus été détaillés, les modes de réalisation décrits étant là encore compatibles avec les circuits et systèmes usuels.

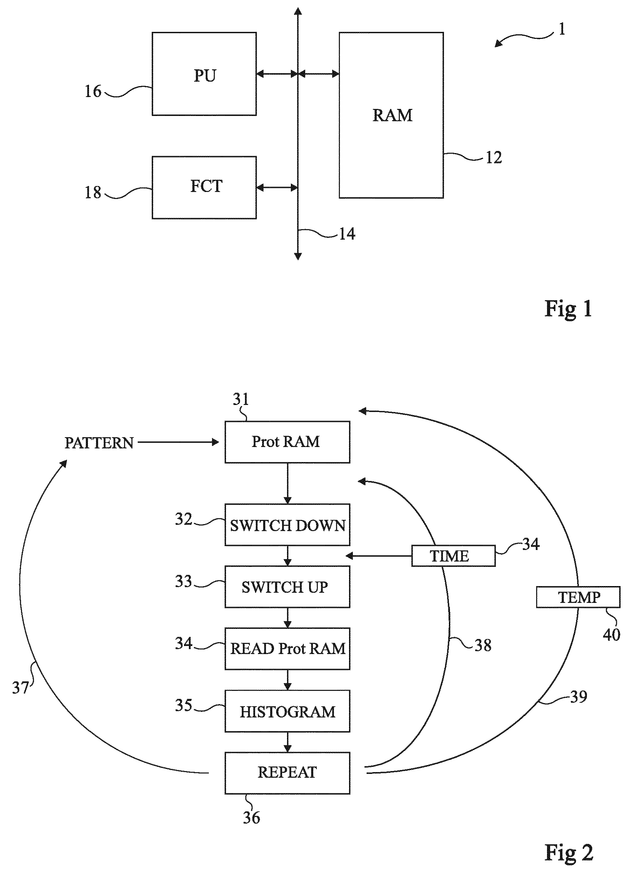

La figure 1 représente, de façon très schématique et sous forme de blocs, un exemple de circuit électronique intégré incluant une mémoire volatile 12 dont on souhaite protéger tout ou partie du contenu. Cette mémoire est reliée par un ou plusieurs bus 14 de données, d'adresses et de commandes à différents circuits électroniques du système 1. Par exemple, au moins une unité de traitement 16 (PU) est susceptible d'utiliser la mémoire 12 pour y stocker temporairement des données manipulées. D'autres circuits du système électronique peuvent également avoir besoin d'accéder à la mémoire 12. En figure 1, ces autres circuits ou fonctions ont été illustrés par un bloc 18 (FCT).

La mémoire 12 stocke différentes données manipulées par les différents circuits, et notamment par l'unité de traitement 16. Dans des applications où le circuit électronique manipule des quantités secrètes, qu'il s'agisse de données ou d'algorithmes, une ou plusieurs zones de la mémoire 12 sont dédiées à ces applications dites sécurisées. Pour cela, lors de la mise en route du circuit ou lors d'une initialisation, l'unité de traitement 16 ou une unité dédiée à la mémoire (Memory Management Unit, par exemple) configure des droits d'accès à ces zones de la mémoire 12 et, par exemple, réserve l'accès de certaines zones à des programmes autorisés à manipuler les données secrètes.

Un problème qui se pose est la vulnérabilité des données stockées dans la mémoire volatile à des attaques consistant à provoquer une réinitialisation du circuit. En effet, lors d'une extinction et allumage du circuit, une interruption du processus de configuration des zones protégées ou du processus de réinitialisation de la mémoire vive peut rendre accessibles les données secrètes exploitées avant cette réinitialisation.

Un exemple d'attaque de ce type est connu sous la désignation "Cold Boot" car elles sont souvent accompagnées d'un refroidissement du circuit intégré de façon à ralentir le processus de réinitialisation.

Ces attaques s'effectuent généralement de façon répétée, c'est-à-dire que l'attaquant provoque des extinctions et allumages successifs et à bref délai (pour que la réinitialisation de la mémoire n'ait pas le temps de se produire) du circuit intégré.

L'inventeur s'est aperçu que, pour un même contenu de cellule dans une mémoire volatile, le devenir de ce contenu suite à une extinction et rallumage prenait, de façon statistique, majoritairement les mêmes valeurs. En d'autres termes, à partir d'un motif stocké dans une zone de la mémoire, un motif qui lui est lié, ou une proportion d'états 0 et d'états 1, se retrouve dans le contenu de cette mémoire à la suite de chaque réinitialisation. Il est alors possible de déterminer le motif ou la proportion d'états 0 et d'états 1 que prendra la mémoire suite au stockage du premier motif et des réinitialisations successives. Par motif, on entend un ensemble d'états binaires contenu dans la zone mémoire concernée.

Selon un premier aspect, on prévoit de dédier, à la détection d'attaques de type cold boot, une mémoire volatile séparée de la mémoire stockant les données sensibles, de préférence de taille inférieure à la taille de la mémoire volatile utilisée par le circuit.

Selon un deuxième aspect, on prévoit d'utiliser un oscillateur en anneau pour détecter une attaque de type cold boot. L'inventeur s'est en effet aperçu que la reproductibilité des états de sortie successifs d'une bascule échantillonnant une sortie d'un tel oscillateur est similaire à celle d'un motif dans une mémoire volatile. Une différence est cependant que le motif n'a pas à être choisi et est natif dans le cas d'un oscillateur en anneau.

Dans les deux cas, on commence par déterminer, dans une phase préparatoire ou d'apprentissage, la valeur ou la proportion d'états que prend la mémoire dédiée ou la sortie de l'oscillateur suite à des réinitialisations soudaines. Cette détermination permet ensuite, dans une phase opérationnelle, de comparer la valeur ou la proportion d'états, par exemple périodiquement, pour détecter une éventuelle attaque.

La figure 2 est un schéma bloc illustrant un mode de réalisation d'une phase préparatoire d'un procédé de détection d'une attaque par réinitialisation du type décrite ci-dessus, appliqué au premier aspect.

L'objectif est de déterminer un motif qui sera ensuite stocké dans une mémoire non volatile du circuit pour être transféré, à chaque initialisation, dans la mémoire volatile dédiée à la protection.

Ainsi, selon un mode de réalisation, dans une phase préparatoire ou d'apprentissage, on stocke un motif (pattern) dans une mémoire volatile (bloc 31, PROT RAM) dédiée à la protection ou mémoire témoin. Il est important que cette mémoire soit différente de la mémoire à protéger (12, figure 1) ou, à tout le moins que l'alimentation de cette mémoire puisse être coupée/activée à volonté (à chaque vérification). En effet, elle doit pouvoir être éteinte puis rallumée indépendamment de la mémoire volatile à protéger qui perdrait autrement son contenu à chaque vérification. La phase préparatoire est effectuée soit à l'issue de la fabrication de la mémoire, soit lors d'un processus d'initialisation du procédé de protection mis en oeuvre, par exemple sur commande, lors du fonctionnement du circuit intégré.

On provoque alors une extinction du circuit intégré (bloc 32, SWITCH DOWN), puis à bref délai un rallumage de ce circuit (bloc 33, SWITCH UP). Le délai entre l'extinction et l'allumage (durée de mise hors tension) est de préférence configurable (bloc 34, TIME) et peut prendre différentes valeurs. Typiquement, ce délai est compris entre quelques microsecondes et quelques secondes.

Une fois le rallumage du circuit effectué, on provoque la lecture du contenu de la mémoire (bloc 34, READ ProtRAM). Cette lecture s'effectue bien entendu sans que l'on ait procédé à une réinitialisation de la mémoire. L'objet de la lecture est de déterminer le nombre de cellules mémoire qui ont changé d'état sous l'effet de l'extinction/allumage. Il ne s'agit pas de retrouver le motif "pattern" stocké dans la mémoire, mais de déterminer l'effet sur la mémoire de l'extinction/allumage. Le nombre de changement d'états est stocké (bloc 35, HISTOGRAM) et le processus est répété plusieurs fois (bloc 36, REPEAT). Cette répétition a pour objet de déterminer l'histogramme du nombre de changement d'états de façon statistique à l'allumage de la mémoire.

Les étapes sont de préférence répétées pour plusieurs motifs (flèche 37), pour plusieurs durées (flèche 38) et plusieurs températures (flèche 39 et bloc 40 - TEMP). En variante, elles sont également répétées pour plusieurs tensions d'alimentation.

Pour exécuter le processus selon plusieurs motifs, on revient à l'étape 31 de stockage dans la mémoire ProtRAM. Pour exécuter le processus selon plusieurs durées d'interruption, on revient à l'étape d'extinction 32. Pour exécuter le processus avec plusieurs températures, on revient avant l'étape 31 pour réessayer avec différents motifs.

Un objectif de cette phase d'apprentissage est, pour un motif donné, de déterminer dans quel intervalle statistique se situe le nombre de changements d'états suite à une extinction/allumage pour principalement différentes températures et préférentiellement différentes durées de mise hors tension et différentes tensions d'alimentation. Selon un mode de réalisation, on détermine la distance de Hamming entre le motif de référence et le motif courant en combinant leurs états respectifs par une comparaison de type Non OU-Exclusif (XNOR).

De préférence, on extrait de cette phase d'apprentissage un ou plusieurs motifs et une ou plusieurs durées d'extinction qui sont les plus représentatifs en termes de renseignement sur la température du circuit. En d'autres termes, on cherche un motif et une durée de mise hors tension pour lesquels la variation du nombre de changement d'états en fonction de la température du circuit est la plus significative. Ainsi, en phase opérationnelle, une extinction et un allumage de la mémoire témoin contenant ce motif permet d'évaluer la température du circuit et, par voie de conséquence, la probabilité d'être en présence d'une attaque.

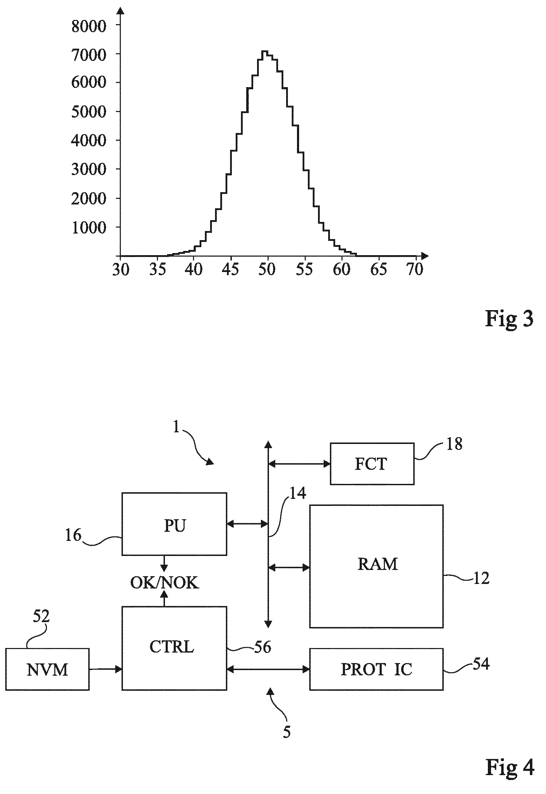

La figure 3 est un histogramme illustrant la mise en oeuvre de la phase d'apprentissage décrite en relation avec la figure 2. Cette figure illustre un exemple de nombre de cellules ayant changé d'états pour un motif et une température donnés. Dans cet exemple, on assiste à une gaussienne centrée sur 48 %, s'étageant entre 40 et 60 %. Cet histogramme permet, par exemple, de fixer un intervalle en nombre de changements d'état qui, s'il n'est pas respecté lors d'une vérification en phase opérationnelle, signifie que le risque d'être en présence d'une attaque est élevé.

Une fois le motif choisi, celui-ci est stocké dans une zone de mémoire non volatile du circuit 1. La mémoire RAM de protection est configurée pour, à chaque réinitialisation, être chargée avec le motif.

La figure 4 représente, sous forme de blocs, un mode de réalisation d'un circuit intégré 1, équipé de circuits 5 de détection d'attaque de type "cold-boot".

On retrouve une unité de traitement 16, une mémoire volatile 12 à protéger et une ou plusieurs fonctions 18. Par ailleurs, le circuit 5 comporte une mémoire non volatile 52 (NVM). Cette mémoire n'est pas nécessairement dédiée à la protection mais peut être une mémoire servant aux autres fonctions du circuit. Elle peut par conséquent, contrairement à ce qui est représenté, être reliée aux bus 14.

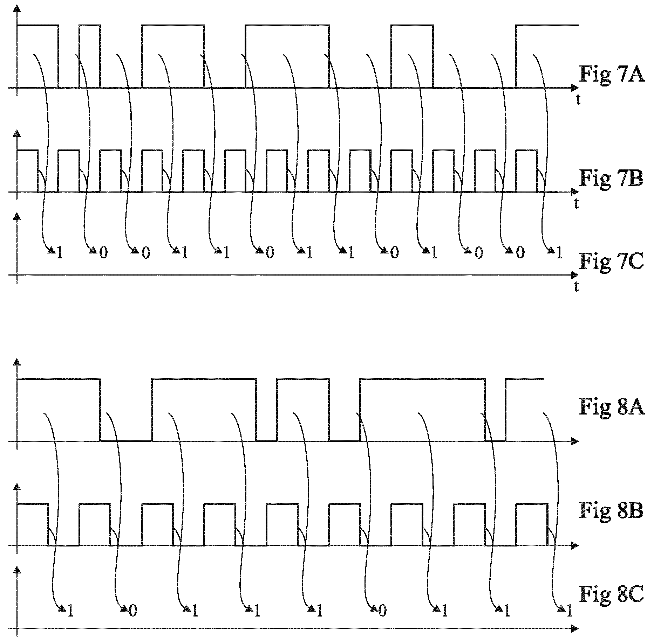

Le circuit 5 de détection comporte un circuit de protection 54 (PROT IC), par exemple selon le premier aspect une mémoire volatile (31, figure 2) dédiée à la protection ou selon le deuxième aspect qui sera décrit en relation avec les figures 7 et suivantes, un oscillateur en anneau, et un circuit de commande 56 (CTRL). Le circuit 56 fournit un résultat de détection OK/NOK, par exemple, à l'unité de traitement 16, afin de prendre des contremesures (par exemple, un blocage du circuit 1) en cas d'attaque détectée.

Pour la mise en oeuvre du premier aspect, le circuit de commande 56 contrôle le transfert du motif stocké dans la mémoire 52 vers la mémoire 54 à chaque réinitialisation du circuit.

Dans la représentation de la figure 4, les mémoires 52 et 54 ont été illustrées comme communiquant uniquement avec le circuit 56. En variante, elles peuvent être reliées aux bus 14 et, pour la mémoire 52, servir également à d'autres fonctions.

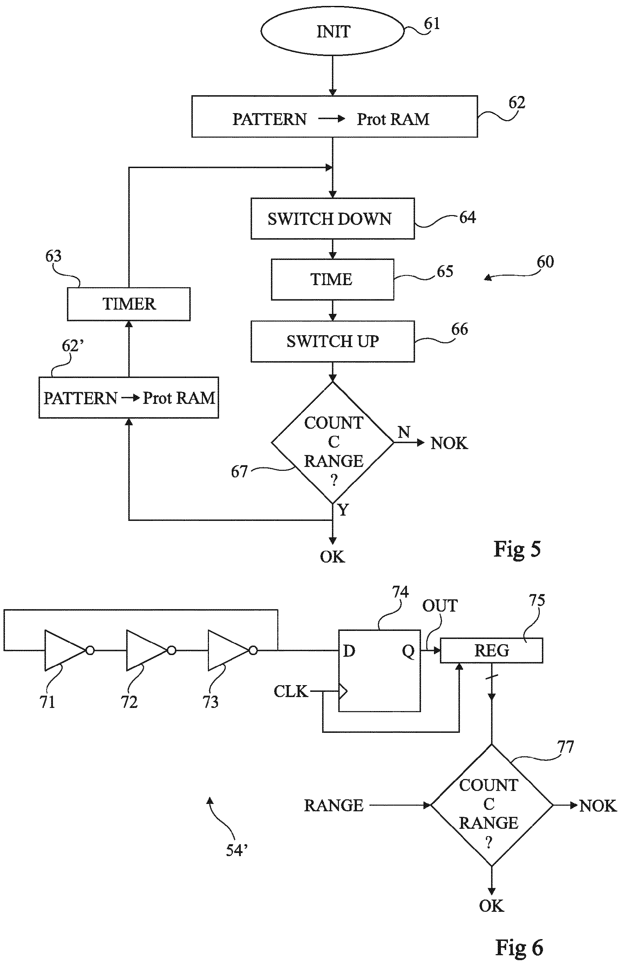

La figure 5 représente, de façon simplifiée et sous forme de blocs, un mode de réalisation d'un procédé de détection d'une attaque de type cold-boot mettant en oeuvre le premier aspect.

A chaque initialisation (bloc 61, INIT) ou réinitialisation du circuit 5, le motif stocké dans la mémoire 52 est transféré (bloc 62, PATTERN -> Prot RAM) vers la mémoire de protection 54.

Puis, le circuit 36 provoque, de préférence périodiquement (boucle illustrée par le bloc 63, TIMER), une procédure de vérification 60.

Cette procédure commence par une extinction (bloc 64, SWITCH DOWN), suivie après un temps de mise hors tension (bloc 65, TIME), d'un rallumage (bloc 66, SWITCH UP) de la mémoire témoin 54 (ici la mémoire 31, figure 2). Le circuit 56 (ou l'unité 16 selon que la réalisation est matérielle ou logicielle) provoque alors la lecture de la mémoire témoin pour compter le nombre de cellules ayant changé d'état et vérifie si ce nombre est compris dans l'intervalle associé au motif (bloc 67, COUNT C RANGE ?). L'intervalle RANGE de valeurs autorisées est, par exemple, stocké avec le motif en mémoire non volatile et est alors lu à chaque vérification. Si le nombre COUNT est correct (sortie Y du bloc 67), on considère le risque d'être en présence d'une attaque négligeable et le circuit 56 renvoie un état OK. Le motif est alors rechargé dans la mémoire témoin depuis la mémoire non volatile (bloc 62', PATTERN -> Prot RAM) pour être prêt pour la vérification suivante.

Si le nombre COUNT est hors de la plage (sortie N du bloc 67), cela signifie une forte probabilité d'être en présence d'une attaque, c'est-à-dire que le circuit a été refroidi depuis la dernière vérification, et le circuit 56 renvoi un état NOK.

Selon une variante de réalisation, la phase de caractérisation a permis de déterminer un motif qui ne nécessite pas d'être rechargé, c'est-à-dire que, dans la plage de températures autorisées, l'extinction/allumage de la mémoire témoin conduit à un compte COUNT restant dans la plage autorisée sans rechargement du motif. Dans ce cas, on évite l'étape 62'.

La périodicité de réalisation du test est choisie suffisamment courte pour que le nombre d'attaques possibles par interruption entre deux tests ne soit pas suffisant à un attaquant pour découvrir les informations sensibles.

Selon la finesse souhaitée dans la détection, on peut conserver plusieurs motifs pour différentes températures en mémoire non volatile et leurs réponses respectives. On peut alors sélectionner le motif à stocker en fonction de la température de fonctionnement du circuit (qu'il faut alors équiper d'un capteur de température) et mettre à jour le motif, dans la mémoire RAM de protection, en fonction de la température de fonctionnement. Bien entendu, cela s'effectue au prix d'un espace plus important dans la mémoire non volatile. A titre d'exemple particulier de réalisation, le motif comprend entre 8 et 64 bits.

La figure 6 représente le schéma électrique d'un mode de réalisation selon le deuxième aspect.

On prévoit d'intégrer, dans le circuit 5, un ou plusieurs oscillateurs en anneau. Dans l'exemple de la figure 6, cet oscillateur comporte trois inverseurs 71, 72 et 73 connectés en série, la sortie du dernier inverseur 73 étant rebouclée sur l'entrée du premier 71 et étant reliée à une entrée de données D d'une bascule D 74. L'entrée d'horloge de la bascule 74 reçoit un signal d'horloge CLK et sa sortie, par exemple directe Q, fournit un signal de détection OUT. En fait, l'échantillonnage réalisé par la bascule D fournit une succession d'états au rythme de l'horloge CLK. En variante, l'entrée d'horloge de la bascule est pilotée par un oscillateur en anneau distinct de l'oscillateur 54'.

Le signal OUT est interprété pour déterminer sa variation par rapport à un signal de référence dans une plage de températures de fonctionnement autorisées.

Par exemple le signal OUT est envoyé en entrée d'un registre à décalage 75 (REG) au rythme de l'horloge CLK, stockant un résultat issu des précédentes sorties de l'oscillateur en anneau. A chaque besoin de vérification (à chaque test de détection d'une attaque), on vérifie (bloc 77, COUNT C RANGE ?) si le nombre d'états "1" (ou le nombre d'états "0") dans le registre 75 est compris dans une plage autorisée RANGE.

En effet, la réponse de l'oscillateur en anneau varie en fonction de la température qui influence le bruit thermique des transistors, ce qui conditionne les changements d'états en entrée D de la bascule 74.

Comme pour le cas d'une mémoire volatile témoin décrit précédemment, on détermine, dans une phase d'apprentissage, la réponse statistique (c'est-à-dire l'état du bit de sortie de la bascule 74 ou, plus précisément, le nombre de "0" ou de "1" dans le registre 75) à différentes températures, afin de déterminer la sortie majoritaire prise à l'allumage. L'intervalle RANGE auquel comparer la réponse du circuit 54' est, comme dans le mode de réalisation à base d'une mémoire dédiée, stocké en mémoire non volatile 32.

Par rapport au mode de réalisation de la figure 2, il n'y a ici pas de motif à choisir. On peut considérer que le motif est en quelque sorte "natif" et stocké de façon matérielle par l'oscillateur en anneau. Pour améliorer l'effet statistique, on pourra prévoir plusieurs oscillateurs en anneau en parallèle dont les sorties sont combinées (par exemple par un OU-Exclusif), la bascule 74 recevant le résultat de cette combinaison.

Les figures 7A, 7B, 7C, 8A, 8B, 8C illustrent le fonctionnement du circuit selon le deuxième aspect, respectivement en fonctionnement "normal" (figures 7A à 7C) et en présence d'une attaque par refroidissement du circuit (figures 8A à 8C). Les figures 7A et 8A illustrent des exemples d'allure du signal en entrée D de la bascule 74. Les figures 7B et 8B illustrent des exemples correspondants de signal d'horloge CLK. Les figures 7C et 8C illustrent des exemples correspondant du signal Q de sortie de la bascule 74, donc de contenu du registre 75.

Dans la plage de fonctionnement normal du circuit, les oscillations ont une certaine forme (arbitraire). En présence d'une attaque par refroidissement, l'allure des oscillations de l'oscillateur en anneau est perturbée. Côté signal d'horloge, en supposant une horloge stable, le refroidissement a pour effet de modifier la fréquence mais pas le rapport cyclique. Ainsi, le signal en sortie de la bascule 75 a une autre allure qu'en l'absence d'attaque.

En variante, un circuit d'une autre nature est intégré pour jouer le rôle du circuit 54'. Ce qui importe, c'est de disposer d'un circuit intégré dont la réponse statistique d'un signal de sortie est différente lorsqu'il est soumis à des extinctions/allumages répétés avec refroidissement par rapport à cette réponse lors d'un fonctionnement stable.

Des modes de réalisation particuliers ont été décrits. Diverses variantes et modifications apparaîtront à l'homme de l'art. En particulier, la mise en oeuvre pratique des modes de réalisation décrits est à la portée de l'homme du métier à partir des indications fonctionnelles données ci-dessus.

## Revendications

1. Procédé de détection d'une attaque par refroidissement d'un circuit intégré (1) comportant les étapes suivantes :
transférer (62), dans une première mémoire volatile (54 ; 31) du circuit intégré, un motif stocké dans une mémoire non volatile (52) du circuit ;
provoquer périodiquement une extinction (64) et un allumage (66) de la première mémoire volatile ;
vérifier (67) que le nombre de bits ayant changé d'état est compris dans une plage de valeurs, déterminée par analyse statistique des états pris par les bits de la première mémoire volatile (54 ; 31) lors d'allumages successifs dans une phase d'apprentissage, ledit motif étant choisi pour que ledit nombre de bits changeant d'état varie en fonction de la température du circuit intégré.

2. Procédé selon la revendication 1, dans lequel le motif est rechargé dans la première mémoire volatile (54 ; 31) avant chaque extinction.

3. Procédé selon la revendication 1 ou 2, dans lequel des informations à protéger sont contenues dans une deuxième mémoire volatile (12), distincte de la première.

4. Circuit intégré (1) comportant :
une première mémoire volatile (54 ; 31) ;
une mémoire non volatile (52) ; et
des éléments (5 ; 16) adaptés à la mise en oeuvre du procédé selon l'une quelconque des revendications 1 à 3.

5. Circuit selon la revendication 4, comportant en outre une deuxième mémoire volatile (12), distincte de la première (54 ; 31) et contenant des informations à protéger contre des attaques par allumages successifs et refroidissement du circuit intégré.

6. Circuit selon la revendication 4 ou 5, comportant un circuit de commande (56) provoquant, à chaque initialisation du circuit intégré, un transfert dudit motif de la mémoire non volatile (52) vers la première mémoire volatile (54 ; 31).

## Patentansprüche

1. Ein Verfahren zum Detektieren eines Kaltstart-Angriffs auf einen integrierten Schaltkreis (1), wobei das Verfahren die folgenden Schritte aufweist:
Übertragen (62), in einen ersten flüchtigen Speicher (54; 31) des integrierten Schaltkreises, eines Musters, das in einem nicht-flüchtigen Speicher (52) des Schaltkreises gespeichert ist;
periodisches Veranlassen eines Herunterfahrens (64) und eines Hochfahrens (66) des ersten flüchtigen Speichers;
Verifizieren (67), dass die Anzahl von Bits, die einen geschalteten Zustand aufweisen innerhalb eines Bereichs von Werten liegen, der durch statistische Analyse der Zustände bestimmt wird, die von den Bits des ersten flüchtigen Speichers (54; 31) in aufeinanderfolgenden Hochfahroperationen während einer Trainingsphase eingenommen werden, wobei das Muster derart ausgewählt wird, dass die Anzahl der Bits welche den Zustand ändern entsprechend der Temperatur des integrierten Schaltkreises variiert.

2. Das Verfahren nach Anspruch 1, wobei das Muster vor jedem Herunterfahren wieder in den ersten flüchtigen Speicher (54; 31) geladen wird.

3. Das Verfahren nach Anspruch 1 oder 2, wobei zu schützende Information in einem zweiten flüchtigen Speicher (12), der von dem ersten getrennt ist, enthalten ist.

4. Ein integrierter Schaltkreis (1), der Folgendes aufweist:
einen ersten flüchtigen Speicher (54; 31);
einen nicht-flüchtigen Speicher (52); und
Elemente (5; 16), die geeignet sind das Verfahren nach einem der Ansprüche 1 bis 3 zu implementieren.

5. Der Schaltkreis nach Anspruch 4, wobei der Schaltkreis ferner einen zweiten flüchtigen Speicher (12) aufweist, der von dem ersten (54; 31) getrennt ist und der Information aufweist, die gegen Angriffe zu schützen ist, durch aufeinanderfolgende Operationen des Hochfahrens und Kühlens des integrierten Schaltkreises.

6. Der Schaltkreis nach Anspruch 4 oder 5, wobei der Schaltkreis einen Steuerschaltkreis (56) aufweist, der jedes Mal wenn der integrierte Schaltkreis initialisiert wird, eine Übertragung des Musters von dem nicht-flüchtigen Speicher (52) zu dem ersten flüchtigen Speicher (54; 31) bewirkt.

## Claims

1. A method of detecting a cold-boot attack on an integrated circuit (1), comprising the steps of:
transferring (62), into a first volatile memory (54; 31) of the integrated circuit, a pattern stored in a non-volatile memory (52) of the circuit;
periodically causing a switching down (64) and a switching up (66) of the first volatile memory;
verifying (67) that the number of bits having switched state is within a range of values determined by statistical analysis of the states taken by the bits of the first volatile memory (54; 31) in successive switch up operations during a training phase, said pattern being selected so that said number of bits which switch state varies according to the integrated circuit temperature.

2. The method of claim 1, wherein the pattern is reloaded into the first volatile memory (54; 31) before each switching down.

3. The method of claim 1 or 2, wherein information to be protected is contained in a second volatile memory (12), separate from the first one.

4. An integrated circuit (1) comprising:
a first volatile memory (54; 31);
a non-volatile memory (52); and
elements (5; 16) capable of implementing the method of any of claims 1 to 3.

5. The circuit of claim 4, further comprising a second volatile memory (12), separate from the first one (54; 31) and containing information to be protected against attacks by successive operations of switching up and cooling of the integrated circuit.

6. The circuit of claim 4 or 5, comprising a control circuit (56) causing, each time the integrated circuit is initialized, a transfer of said pattern from the non-volatile memory (52) to the first volatile memory (54; 31).
